# EUROPÄISCHE PATENTANMELDUNG

(11) **EP 0 900 618 A1**
(43) Veröffentlichungstag der Anmeldung: **10.03.1999**
(21) Anmeldenummer: 98116775.2
(22) Anmeldetag: 04.09.1998
(51) Int. Cl.: B23H 11/00, B23Q 16/00, B23Q 3/18

(54) **Halteplatte für ein Werkstück**

(30) Priorität: 07.09.1997 DE 19739059
(71) Anmelder: System 3R International AB, 162 50 Vällingby (SE)
(72) Erfinder: Nordquist, Hakan, 187 75 Täby (SE)
(74) Vertreter: Zinngrebe, Horst, Dr.rer.nat.

(57) **Zusammenfassung**

Beschrieben wird eine Halteplatte für ein durch eine Werkzeugmaschine zu bearbeitendes Werkstück, wobei die Werkzeugmaschine ein in z-Richtung innerhalb eines Arbeitsbereichs bewegbares Werkzeug, beispielsweise einen Erodierdraht, aufweist und der Arbeitsbereich in z-Richtung durch eine zur z-Richtung senkrechte xy-Ebene begrenzt ist, sowie mit einem neben der Bewegungsrichtung des Werkzeugs angeordneten Arbeitstisch, dessen Arbeisfläche sich in einer vorgegebenen Lage relativ zur xy-Ebene befindet. Damit ein insbesondere bei einer Drahterodiermaschine verwendbarer Halter geschaffen wird, der eine beliebig oft durchführbare Umsetzung des Werkstücks ohne Genauigkeitsverlust in seiner Positionierung erlaubt, ist vorgesehen, daß ein erster flächiger Abschnitt der Halteplatte wenigstens eine Öffnung zum Einsatz des Werkstücks sowie an der Öffnung Haltemittel für das Werkstück aufweist, daß ein zweiter Abschnitt der Halteplatte mit Elementen versehen ist, die geeignet sind, mit Gegenelementen an einer am Arbeitstisch vorgesehenen Spannvorrichtung zur wiederholbaren, exakten Positionierung des ersten Abschnittes im Arbeitsbesreich zusammenzuwirken.

## Beschreibung

Die Erfindung betrifft eine Halteplatte für ein durch eine Werkzeugmaschine zu bearbeitendes Werkstuck, wobei die Werkzeugmaschine ein in z-Richtung innerhalb eines Arbeitsbereiches bewegbares Werkzeug, beispielsweise einen Erodierdraht, aufweist und der Arbeitsbereich in z-Richtung durch eine zur z-Richtung senkrechte xy-Ebene begrenzt ist, sowie mit einem neben der Bewegungsrichtung des Werkzeugs angeordneten Arbeitstisch dessen Arbeitsfläche sich in einer vorgegebenen Lage relativ zur xy-Ebene befindet, sowie eine Werkzeugmaschine, insbesondere Drahterosionsmaschine.

Vornehmlich bei der elektroerosiven Werkstückbearbeitung ist es vor allem im Präzisions-Kleinserienbau erforderlich, das an einem Werhstückhalter befestigte Werkstück von einer Bearbeitungsstelle zur anderen zu transportieren, ohne daß dabei die einmal vollzogene Justierung des Werkstücks beispielsweise in einen, Orthogonalsystem verloren geht. Für Senkerodiermaschinen sind dazu mit Referenzelementen versehene Halter geschaffen worden, die mit Referenz-Gegenelementen an einem mit einer Spannvorrichtung ausgerüsteten Futter der Maschine zur exakten Positionierung des Werkstücks mit hoher Repetiergenauigkeit zusammenwirken können.

Bei einer Drahterodiermaschine sind derartigen Halter wegen des für ihre Verwendung störenden Erodierdrahtes nicht einsetzbar. Der Erfindung liegt daher die Aufgabe zugrunde einen insbesondere bei einer Drahterodiermaschine verwendbaren Halter für das zu bearbeitende Werkzeug zu schaffen, der eine beliebig oft durchführbare Umsetzung des Werkstücks ohne Genauigkeitsverlust in seiner Positionierung erlaubt.

Erfindungsgemäß ist dazu bei der eingangs genannten Halteplatte vorgesehen, daß ein erster flächiger Abschnitt der Halteplatte wenigstens eine Öffnung zum Einsatz des Werkstücks sowie an der Öffnung Haltemittel für das Werkstück aufweist, und daß ein zweiter Abschnitt der Halteplatte mit Elementen versehen ist, die geeignet sind, mit Gegenelementen an einer am Arbeitstisch vorgesehenen Spannvorrichtung zur wiederholbaren, exakten Positionierung des ersten Abschnittes im Arbeitsbereich zusammenzuwirken. Nach Einklemmen des Werkstücks in der Öffnung behält es seine feste Lage relativ zu der Halteplatte, so daß diese mit dem Werkstuck ohne Genauigkeitsverlust in der Positionierung beliebig oft umgesetzt werden kann. Die Halteplatte ist einfach und preisgünstig herstellbar, weil sie bis auf die (Referenz)-Elemente keiner besonders präzisen Bearbeitung bedarf. Dabei kann der Arbeitsbereich günstig ausgenutzt werden indem der erste Abschnitt ganz am untersten Ende der Arbeitsbereichsbegrenzung gehalten wird, so daß auch relativ voluminöse Werkstücke erosiv bearbeitbar werden können.

Zweckmäßig ist die Öffnung von dem ersten Abschnitt vollständig umschlossen: ferner ist es möglich, in dem ersten Abschnitt mehrere Öffnungen vorzusehen, so daß dann mehrere Werkstücke gleichzeitig von der Halteplatte aufgenommen werden können. In weiterhin bevorzugter Ausgestaltung der Erfindung ist wenigstens eine Starterbohrung zur Herstellung der der Form des Werkstücks angepaßten Öffnung im ersten Abschnitt vorgesehen. Durch die Starterbohrung kann beispielsweise der Erodierdraht hindurchgefädelt und anschließend die Öffnung für das Werkstück aus dem ersten Abschnitt herausgeschnitten werden.

Der zweite Abschnitt der Halteplatte stellt mit den Elementen die Verbindung zur Maschine über die Spannvorrichtung in einer Weise her, die nicht nur ihr positionierungsgenaues Umsetzen problemlos erlaubt, sondern auch den Positionsunterschied zwischen Arbeitsfläche und Arbeitsbereich ohne weiteres ausgleicht. Je nach Ausgestaltung der Werkzeugmaschine im einzelnen ist daher der zweite Abschnitt relativ zum ersten Abschnitt normalerweise quer zu dessen Flächenausdehnung versetzt, wobei an der Halteplatte zwischen erstem und zweitem Abschnitt ein stufenförmiger oder geneigter Übergangsabschnitt ausgebildet ist. Wenn in Weiterbildung der Erfindung speziell die beiden gegenüberliegenden Seitenflanken des zweiten Abschnittes mit Profilen für einen Greifer eines automatisch betätigten Manipulators ausgerüstet sind läßt sich die erfindungsgemäße Halteplatte mit Werkstück automatisch von einem Arbeitstisch zu einem anderen umsetzen.

Elemente und Gegenelemente können entsprechend den Erfordernissen eines der an sich bekannten Referenzsysteme ausgebildet werden, wie sie etwa in EP-111092 oder EP 255 042 oder EP-A-722809 beschrieben sind. Dabei empfiehlt es sich, am zweiten Abschnitt zwei einander gegenüberliegende, das heißt an dessen Unterseite und dessen Oberseite, Referenzelemente auszubilden, so daß die Halteplatte auch in einer um 180 Grad gewendeten Position verwendbar ist.

Im übrigen sind bevorzugte Ausgestaltungen der Erfindung in den Unteransprüchen angegeben.

Die Erfindung wird nachstehend im einzelnen an dem in der beigefügten Zeichnung dargestellten Ausführungsbeispiel beschrieben. Es zeigen:
- Fig. 1:: eine schematische Seitenansicht einer Drahterosionsmaschine, an welcher ein zu bearbeitendes Werkstück mittels einer erfindungsgemäßen Halteplatte mit Spannvorrichtung gehalten ist.
- Fig. 2:: eine schematische perspektivische Darstellung der Halteplatte mit angeklemmten Werkstücken und Spannvorrichtung nach Fig. 1, und
- Fig. 3:: eine weitere Ausführungsform der erfindungsgemäßen Halteplatte.

Eine Drahterodiermaschine besitzt einen Kopf 2 sowie ein auf den Kopf 2 ausgerichtetes Unterteil 3, wobei als Werkzeug ein Erodierdraht 6 aus den, unteren Ende des Kopfes austritt und nach Durchqueren des zwischen Kopf 2 und Unterteil 3 befindlichen Arbeitsbereichs vom Unterteil 3 aufgenommen wird. Der Erodierdraht ist dabei so ausgerichtet, daß er den Arbeitsbereich in der vertikalen z-Richtung 4 durchläuft. Der Arbeitsbereich, in welchem ein Werkstück 5 gehalten werden muß, um von dem Erodierdraht 6 zuverlässig geschnitten werden zu können, ist in z-Richtung durch eine obere und eine untere Horizontalebene begrenzt, von denen die hier interessierende untere Horizontalebene nachfolgend mit xy-Ebene 7 bezeichnet wird.

Neben dem Unterteil 3 steht ein Arbeitstisch 8, dessen obere Arbeitsfläche 9 im hier dargestellten Ausführungsbeispiel der Erfindung in der xy-Ebene 7 liegt und für die Einjustierung als z-Referenzfläche dienen kann. Auf der Arbeitsfläche 9 ist neben dem Arbeitsbereich eine pneumatisch arbeitende Spannvorrichtung 50 mit nach oben vorstehendem Zuganker 51 dauerhaft befestigt. In der Spannvorrichtung ist ein nicht dargestellter Betätigungsmechanismus für den Zuganker 51 vorhanden, der an eine steuerbare Druckluftquelle angeschlossen ist. Aus der der Arbeitsfläche 9 gegenüberliegenden Oberseite 52 stehen um den mittigen Zuganker 51 herum kreuzweise angeordnete Referenzgegenelemente 62, 64, 66, 68 sowie 72, 74, 76, 78 vor, von denen vier Referenzgegenelemente aus jeweils einem an seinem freien Ende mit gegenüberliegenden Schrägflächen versehenen Zapfen 62, 64, 66, 68 und die anderen vier Referenzgegenelemente aus jeweils einem im wesentlichen zylindrischen und mit planer Stirnfläche versehenen Pfosten 72, 74, 76, 78 bestehen. Zwischen je zwei benachbarten Zapfen befindet sich ein Pfosten und die planen Stirnflachen aller Pfosten liegen in einer gemeinsamen, zur xy-Ebene 7 parallelen Ebene. Die Zapfen bilden in ihrer kreuzweisen Anordnung eine Referenz in der x- und y-Richtung, während die planen Stirnflächen der Pfosten eine z-Referenz bieten. Ein derartiges Referenzsystem ist in der EP 255042 beschrieben.

Die Halteplatte 10 besteht aus einem ersten, im wesentlichen ebenen und flächigen Abschnitt 20 sowie einem zweiten, sich im wesentlichen parallel zum ersten Abschnitt 20 erstreckenden Abschnitt 40, der über einen Übergangsabschnitt 70 in den ersten Abschnitt 20 mündet.

Die Oberseite 23 und die Unterseite 21 des ersten Abschnittes 20 erstrecken sich parallel zueinander und senkrecht zur z-Richtung 4, wenn die Halteplatte 10, wie noch zu erläutern sein wird, an die Spannvorrichtung 50 angespannt ist. Der erste Abschnitt 20 ist in der Nähe seines Randes von zwei Starterbohrungen 36, 38 durchsetzt, wobei der Erodierdraht 6 durch je eine der beiden Starterbohrungen hindurchgefädelt werden kann. Ferner sind im ersten Abschnitt zwei nebeneinander ausgebildete Öffnungen 25, 65 vorhanden. In die erste Öffnung 25 kann ein vom Erodierdraht 6 zu bearbeitendes Werkstück 5 eingesetzt und in der Öffnung 25 von einem Haltemittel in Form einer sich quer zur Öffnung 25 erstreckenden Klemmschraube 32 eingeklemmt werden. Entsprechend ist in der zweiten Öffnung 65 ein hier ebenfalls zylindrisches Werkstück 55 mittels einer Klemmschraube 34 eingeklemmt.

Wenn der Erodierdraht in die Starterbohrung 36 eingefädelt ist, kann die Öffnung 25 durch entsprechende Bewegungen des Erodierdrahtauslasses am Kopf 2 und des Erodierdrahteinlasses am Unterteil 3 aus dem Material der Halteplatte 10 durch den Erodierdraht 6 ausgeschnitten werden. Wenn der Erodierdraht 6 in die Starterbohrung 38 eingefädelt ist, kann entsprechend die Öffnung 65 durch den Erodierdraht 6 aus dem ersten Abschnitt auserodiert werden. Dabei kann der Erodierdraht 6 so geführt werden, daß der Umriß der entstehenden Öffnung 25 bzw. 65 möglichst genau dem Umriß des von den Öffnungen aufzunehmenden Werkstückes 5 bzw. 55 angepaßt ist. Das Werkstück 5 bzw. 55 erhält damit eine für alle künftigen an ihm auszuführenden Bearbeitungen feste Lagebeziehung zur Halteplatte 10.

Es versteht sich, daß die Lage der Öffnung 25 und der Öffnung 65 im ersten Abschnitt 20 keinen Beschränkungen unterworfen ist. Für ein Werkstück relativ großen Durchmessers kann nur eine Öffnung vorgesehen sein, für Werkstücke kleiner Abmessungen können natürlich auch mehr als die beiden dargestellten Öffnungen aus dem ersten Abschnitt 20 ausgeschnitten sein, wobei jeweils einer Öffnung eine Klemmschraube zum Einklemmen des zugehörigen Werkstücks zugeordnet ist.

An die klemmschraubenfreie Seite des ersten Abschnittes 20 schließt sich der Übergangsabschnitt 70 an, der im hier dargestellten Ausführungsbeispiel der Erfindung mit einem Winkel von etwa 45 Grad zum zweiten Abschnitt 40 ansteigt. Je nach Lage der Arbeitsfläche 9 in z-Richtung und Höhe der Spannvorrichtung 50 in z-Richtung 4 relativ zur xy-Ebene 7 kann jener Winkel größer oder kleiner sein und auch Null Grad betragen. Er ist jedenfalls so bemessen, daß bei an die Spannvorrichtung 50 angespannter Halteplatte 10 die Unterseite 21 möglichst genau in der xy-Ebene 7, und nicht unterhalb derselben liegt. Diese Maßnahme sichert eine volle Ausnutzung des Arbeitsbereichs insbesondere bei Werkstücken. die nach Einklemmen in eine der Öffnungen 25, 65 eine große Erstreckung in z-Richtung 4 haben.

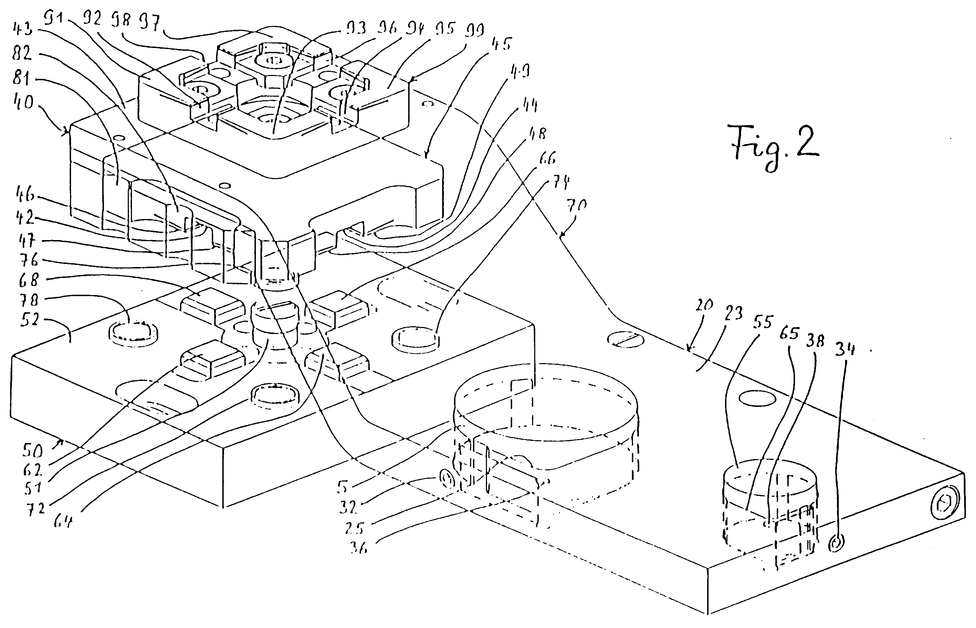

Der zweite Abschnitt 40 ist ebenso wie der erste Abschnitt 20 im wesentlichen flächig und seine Oberseite 43 wie auch seine Unterseite 41 erstrecken sich parallel zur Oberseite 23 des ersten Abschnittes 20. An der Unterseite 41 ist ein Referenzen tragendes Bauteil 45 mit nach unten frei liegenden Referenzen befestigt, das gleich oder ähnlich gestaltet ist wie das auf der Oberseite 43 befestigte weitere Referenzbauteil 99, welches auf das Bauteil 45 in x- und in y-Richtung ausgerichtet ist und dessen Referenzen nach oben frei liegen, so daß die Referenzen des Bauteils 45 und des Referenzbauteils 99 bezüglich des zweiten Abschnittes 40 spiegelsymmetrisch zueinander angeordnet sind. Wegen der leichteren Wahrnehmbarkeit des Referenzbauteils 99 in Figur 2 wird zunächst dieses beschrieben.

Die am Referenzbauteil 99 ausgebildeten Referenzen gleichen denjenigen, die anhand eines Elektrodenhalters in EP 255042 im einzelnen beschrieben sind, so daß hier ergänzend auf diese Schrift Bezug genommen wird. In den vier Eckbereichen der freien Oberseite des Referenzbauteils 99 sind als z-Referenzen dienende und insgesamt in einer zur xy-Ebene 7 (bei angespannter Halteplatte 10) parallel liegende plane Flächenstücke ausgebildet, die in den Ansprüchen als eine Gruppe weiterer Elemente 91, 93, 95, 97 bezeichnet sind. In der Mitte zwischen je zwei weiteren Elementen ist in die Seitenwand des Referenzbauteils 99 je eine Nut eingearbeitet, so daß alle vier Nuten kreuzweise angelegt sind und gegenüberliegende Nuten fluchten. An den gegenüberliegenden freien Flanken jeder Nut ist durch Hinterschnitt je eine axial oder in z-Richtung 4 federnde Lippe ausgebildet. Jede Nut mit zugehörigem Lippenpaar bildet ein weiteres Element einer zweiten Gruppe, wobei diese weiteren Elemente mit 92, 94, 96, 98 bezeichnet sind. Ersichtlich bilden diese vier weiteren Elemente insgesamt eine Referenz in x-und in y-Richtung.

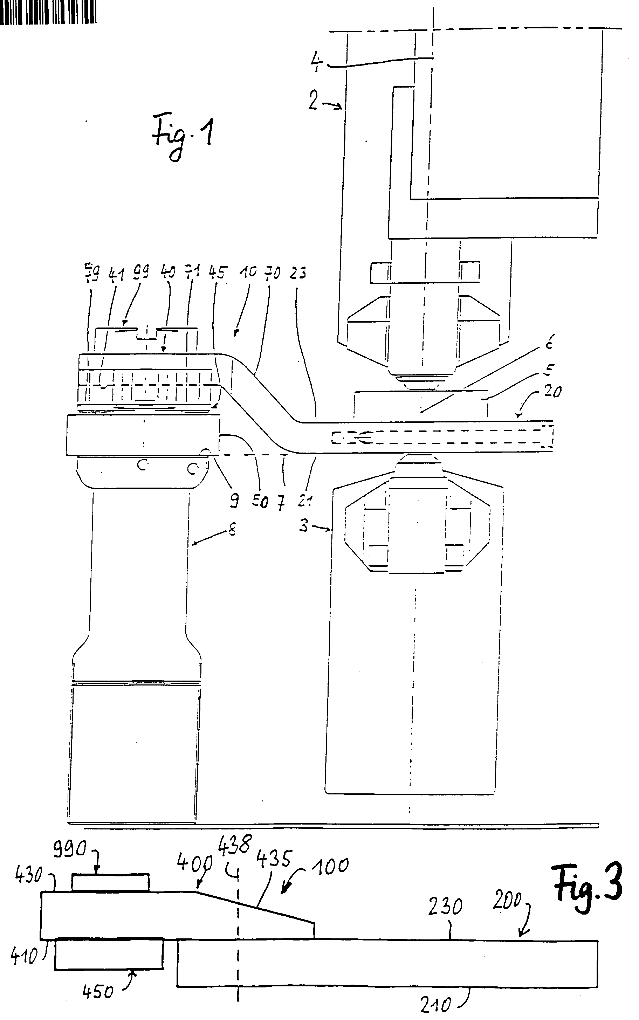

Bei der in Figur 2 gewählten Darstellung sind von den eine x- und eine y-Referenz bildenden Elementen, die den weiteren Elementen 92, 94, 96, 98 entsprechen, nur die Elemente 42 und 44 mit den Lippenpaaren 46, 47 und 48, 49 zu erkennen, die genau unterhalb der weiteren Elemente 92 und 94 angeordnet sind. Da das Bauteil 45 dem Referenzbauteil 99 gleicht oder ähnlich ist, besitzt das Bauteil 45 selbstverständlich auch den weiteren Elementen 91, 93, 95, 97 entsprechende, als z-Referenz dienende Flächenstücke, von denen in Figur 1 nur die Flächenstücke 71 und 79 zu erkennen sind. Bei von der Spannvorrichtung 50 angespannter Halteplatte 10 sitzen die Flächenstücke 71 und 79 (sowie die nicht erkennbaren weiteren beiden Flächenstücke) auf den freien Stirnflächen der Pfosten 72 und 78 (sowie der Pfosten 76 und 78) auf. Dabei greift gleichzeitig je einer der Zapfen 62, 64, 66, 68 mit seinen Schrägflächen zwischen je ein Lippenpaar 46, 47 bzw. 48, 49 bzw. zwischen die beiden weiteren nicht dargestellten Lippenpaare ein.

Wird die Halteplatte 10 aus ihrer in Figuren 1 und 2 dargestellten Lage um 180 Grad gewendet, kommen beim Anspannen der Halteplatte 10 an die Spannvorrichtung 50 die Flächenstücke 91, 93, 95, 97 beziehentlich auf die freien Stirnflächen der Pfosten 76, 74, 78, 72 zur Auflage, wobei die Zapfen 62, 64, 66, 68 beziehentlich zwischen die Lippenpaare der weiteren Elemente 96, 94, 92, 98 eingreifen. Damit dann die Oberseite 23 in der zur xy-Ebene 7 parallelen oberen Begrenzungsebene des Arbeitsbereichs liegt, kommt eine derartige Wendung der Halteplatte 10 vor allem dann in Betracht, wenn die Arbeitsfläche 9 in z-Richtung 4 weit unterhalb der xy-Ebene 7 liegt.

Das Referenzbauteil 99 wie auch das Bauteil 45 besitzen jeweils in ihrem Zentrum eine Ausnehmung, in welche der Zuganker 51 eingreifen und sich lösbar arretieren kann.

Zum Anspannen der Halteplatte 10 in ihrer in den Figuren dargestellten Lage an die Spannvorrichtung 50 wird das Bauteil 45 so auf die Oberseite 52 der Spannvorrichtung aufgesetzt, daß die Referenzelemente 42, 44 und die beiden nicht zu erkennenden Referenzelemente des Bauteils 45 mit den Referenzgegenelementen 62, 64, 66, 68 wie beschrieben zusammenwirken können. Dabei dringt der Zuganker 51 in die zentrale Ausnehmung des Bauteils 45 ein und verankert sich dort. Alsdann wird die Spannvorrichtung derart mit Druckluft beaufschlagt, daß der Betätigungsmechanismus den Zuganker 51 in die Spannvorrichtung 50 einzieht. Diese Einwärtsbewegung des Zugankers endet, wenn die z-Referenzelemente 71, 79 (und die beiden nicht erkennbaren) auf den freien Stirnflächen der Referenzgegenelemente 72, 74, 76, 78 aufliegen. Die Halteplatte 10 und damit das Werkstuck 5 ist dann in x-, y- und in z-Richtung exakt positioniert. Durch Umschalten der Druckluftbeaufschlagung kann der Zuganker 51 aus der Spannvorrichtung 50 ausfahren und sich aus dem Bauteil 45 lösen, so daß die Halteplatte 10 dann von der Spannvorrichtung abgenommen werden kann.

Das Aufsetzen und Abnehmen der Halteplatte 10 auf die bezw. von der Spannvorrichtung 50 kann auch automatisch mittels eines nicht dargestellten Greifers eines Transportarms an einem Manipulator erfolgen, wenn, wie dargestellt, an den gegenüberliegenden Seitenwangen des zweiten Abschnittes 40 Profile 81, 82 ausgebildet sind, in die Gegenprofile des Greifers passen.

Die in Fig. 3 dargestellte bevorzugte Ausführungsform der Halteplatte besteht aus einer zweiteiligen Konstruktion mit einem ersten Abschnitt 200 und einem zweiten Abschnitt 400, die beide miteinander verbolzt sind. Der erste Abschnitt 200 ist eine Metallplatte mit ebener Oberfläche 230, die sich parallel zur ebenen Bodenfläche 210 der Halteplatte erstreckt. In den ersten Abschnitt 200 sind eine oder mehrere Öffnungen zum Halten eines oder mehrerer Werkstücke ausgebildet, die den Öffnungen 25 bzw. 65 der oben erläuterten Ausführungsform des Abschnittes 20 entsprechen.

Der zweite Abschnitt 400 der Halteplatte 100 besitzt eine ebene Bodenfläche 410, die sich parallel zu einem ebenen äußeren Abschnitt 430 der Oberseite des zweiten Abschnittes erstreckt. Auf dem äußeren Abschnitt 430 ist ein Referenzteil 990 befestigt, das dem Referenzteil 99 aus vorstehender Erläuterung entspricht. Eine Komponente 450, die mit Referenzen ähnlich wie bei der Komponente 45 der oben erläuterten ersten Ausführungsform versehen ist, ist an der Bodenfläche 410 befestigt.

Der äußere Abschnitt 430 setzt sich in einen inneren Abschnitt 435 der Oberseite fort, welcher sich zur Bodenfläche 410 abwärts neigt. Wie dargestellt erstreckt sich der keilförmige Teil des zweiten Abschnittes 400 über einen Teil des ersten Abschnitts 200, in welchem sich keine Halteöffnungen für Werkstücke befinden. Die beiden Abschnitte 200, 400 sind miteinander verbolzt oder in anderer Weise bleibend miteinander verbunden, und die gestrichelte Linie 438 zeigt an, wo beispielsweise fluchtende Bohrungen für Bolzen in den Teil 435 und in den darunter liegenden Teil des Abschnittes 200 eingetrieben sein können.

Wenn die Halteplatte 100 auf dem Futter 50 befestigt ist, erstreckt sich die Bodenfläche 210 genau innerhalb der xy-Ebene 7 des Arbeitsbereichs der Drahterosionsmaschine.

Nach einer weiteren nicht dargestellten Ausführungsform der Halteplane kann diese aus drei Teilen bestehen. Sowohl der erste Abschnitt wie auch der zweite Abschnitt können ebene Metallplatten sein, die miteinander über ein aufrechtstehendes Distanzstück verbunden sein können, welches die unterschiedliche Lage der beiden Abschnitte in z-Richtung ausgleicht.

## Patentansprüche

1. Halteplatte für ein durch eine Werkzeugmaschine zu bearbeitendes Werkstück, wobei die Werkzeugmaschine ein in z-Richtung innerhalb eines Arbeitsbereichs bewegbares Werkzeug, beispielsweise einen Erodierdraht, aufweist und der Arbeitsbereich in z-Richtung durch eine zur z-Richtung senkrechte xy-Ebene begrenzt ist, sowie mit einem neben der Bewegungsrichtung des Werkzeugs angeordneten Arbeitstisch, dessen Arbeitsfläche sich in einer vorgegebenen Lage relativ zur xy-Ebene befindet, dadurch gekennzeichnet, daß ein erster flächiger Abschnitt (20) der Halteplatte (10) wenigstens eine Öffnung (25) zum Einsatz des Werkstücks sowie an der Öffnung (25) Haltemittel (32, 34) für das Werkstuck (5) aufweist daß ein zweiter Abschnitt (40) der Halteplatte (10) mit Elementen (42, 44) versehen ist, die geeignet sind, mit Gegenelementen (62, 64, 66, 68, 72, 74, 76, 78) an einer am Arbeitstisch (8) vorgesehenen Spannvorrichtung (50) zur wiederholbaren, exakten Positionierung des ersten Abschnittes (20) im Arbeitsbereich zusammenzuwirken.

2. Halteplatte nach Anspruch 1, dadurch gekennzeichnet, daß der erste Abschnitt (20) die Öffnung (25) vollständig umschließt.

3. Halteplatte nach Anspruch 1 oder 2, dadurch gekennzeichnet, daß der erste Abschnitt (20) mehrere nebeneinander angeordnete Öffnungen (25, 65) aufweist.

4. Halteplatte nach einem der vorstehenden Ansprüche, dadurch gekennzeichnet, daß der erste Abschnitt (20) wenigstens eine Starterbohrung (36, 38) zur Herstellung der wenigstens einen der Form des Werkstücks (5) angpaßten Öffnung (25, 65) durch das Werkzeug (6) aufweist.

5. Halteplatte nach einem der vorstehenden Ansprüche, dadurch gekennzeichnet. daß die Haltemittel (32, 34) Klemmschrauben aufweisen, die sich in dem ersten Abschnitt (20) zweckmäßig quer zur z-Richtung erstrecken.

6. Halteplatte nach einem der vorstehenden Ansprüche, dadurch gekennzeichnet, daß der erste Abschnitt (20) eine im wesentlichen plane Unterseite (21) aufweist.

7. Halteplatte nach einem der vorstehenden Ansprüche, dadurch gekennzeichnet, daß der erste Abschnitt (20) eine im wesentlichen plane Oberseite (23) besitzt.

8. Halteplatte nach einem der vorstehenden Ansprüche, dadurch gekennzeichnet, daß bei angespannter Halteplatte Unterseite (21) und Oberseite (23) sich im wesentlichen quer zur z-Richtung erstrecken.

9. Halteplatte nach einem der vorstehenden Ansprüche, dadurch gekennzeichnet, daß der zweite Abschnitt (40) relativ zum ersten Abschnitt (20) quer zu dessen Flächenausdehnung versetzt ist, wobei sich zwischen erstem und zweitem Abschnitt ein Übergangsabschnitt (70) befindet, der stufenförmig oder nach Art eines Abhangs gestaltet ist.

10. Halteplatte nach einem der vorstehenden Ansprüche, dadurch gekennzeichnet, daß die Elemente zwei Gruppen umfassen, von denen die Elemente der ersten Gruppe zu einer Positionierung des ersten Abschnittes (20) in einer zur xy-Ebene parallelen Ebene und die Elemente der zweiten Gruppe zu einer Positionierung des ersten Abschnittes in z-Richtung dienen.

11. Halteplatte nach Anspruch 10, dadurch gekennzeichnet, daß die Elemente der ersten Gruppe kreuzweise angeordnet sind.

12. Halteplatte nach Anspruch 10 oder 11, dadurch gekennzeichnet, daß die Elemente der zweiten Gruppe kreuzweise und zweckmäßig derart angeordnet sind, daß sich zwischen je zwei benachbarten Elementen der einen Gruppe ein Element der anderen Gruppe befindet.

13. Halteplatte nach einem der vorstehenden Ansprüche, dadurch gekennzeichnet, daß die Elemente in einer gemeinsamen Ebene angeordnet sind, die sich bei angespannter Halteplatte senkrecht zur z-Richtung erstreckt.

14. Halteplatte nach einem der vorstehenden Ansprüche, dadurch gekennzeichnet, daß die Elemente an der Unterseite (41) des zweiten Abschnittes (40) angeordnet sind.

15. Halteplatte nach einem der Ansprüche 10 bis 14, dadurch gekennzeichnet, daß jedes Element der ersten Gruppe wenigstens eine am Rand einer Nut ausgebildete axialelastische Lippe (46, 47, 48, 49) aufweist.

16. Halteplatte nach einem der Ansprüche 10 bis 15, dadurch gekennzeichnet, daß jedes Element der zweiten Gruppe aus einem axial vorstehenden Pfosten besteht, wobei die freien Stirnflächen aller Pfosten in einer gemeinsamen Ebene liegen.

17. Halteplatte nach einem der vorstehenden Ansprüche, dadurch gekennzeichnet, daß an der Oberseite (43) des zweiten Abschnittes (40) weitere Elemente (92, 94, 96, 98, 91, 93, 95, 97) ausgebildet sind, die in Form. Anordnung und Gruppierung den an der Unterseite (41) ausgebildeten Elementen spiegelbildlich gleichen.

18. Halteplatte nach Anspruch 17, dadurch gekennzeichnet, daß die Elemente (42, 44) an der Unterseite (41) des zweiten Abschnittes (40) zu einem Referenzsystem gehören, das sich von demjenigen Referenzsystem, zu dem die weiteren Elemente an der Oberseite (43) gehören, unterscheidet.

19. Halteplatte nach einem der vorstehenden Ansprüche, dadurch gekennzeichnet, daß die Elemente und/oder die weiteren Elemente in einem Umfangsabstand der einzelnen Elemente voneinander von etwa 120 Grad angeordnet sind.

20. Halteplatte nach einem der vorstehenden Ansprüche, dadurch ge kennzeichnet, daß die auf dem Arbeitstisch (8) befestigte Spannvorrichtung (50) hydraulisch oder pneumatisch arbeitet.

21. Halteplatte nach Anspruch 20, dadurch gekennzeichnet, daß die Gegenelemente (62, 64, 66, 68; 72, 74, 76, 78) der Spannvorrichtung in einer Ebene angeordnet sind, die sich zur z-Richtung senkrecht erstreckt.

22. Halteplatte nach einem der vorstehenden Ansprüche, dadurch gekennzeichnet, daß der zweite Abschnitt (40) relativ zum ersten Abschnitt (20) derart versetzt ist, daß bei angespannter Halteplatte (10) die Unterseite (21) nicht unter die untere Begrenzung des Arbeitsbereichs (8) reicht.

23. Halteplatte nach einem der vorstehenden Ansprüche, dadurch gekennzeichnet. daß an dem zweiten Abschnitt (40), speziell an dessen gegenüberliegenden Seitenflanken, Profile (81, 82) für einen Greifer eines automatisch betätigten Manipulators vorgesehen sind.

24. Werkzeugmaschine, insbesondere Drahterosionsmaschine, mit einer Halteplatte (10) nach einem der vorstehenden Ansprüche.

25. Maschine nach Anspruch 24, dadurch gekennzeichnet, daß neben der Bewegungsrichtung des Werkzeugs, insbesondere des Erosionsdrahtes (6), ein Arbeitstisch (8) angeordnet ist, welcher eine plane, sich senkrecht zur Bewegungsrichtung des Werkzeugs erstreckende Arbeitsfläche (9) besitzt, auf welcher die Spannvorrichtung (50) befestigt ist.

26. Maschine nach Anspruch 25, dadurch gekennzeichnet, daß die Arbeitsfläche (9) in der unteren Begrenzungsebene (7) für den Arbeitsbereich des Werkzeugs liegt.
